(19) Europäisches Patentamt
European Patent Office
Office européen des brevets

(11) EP 3 228 609 A1

(12) EUROPEAN PATENT APPLICATION

(43) Date of publication:
**11.10.2017 Bulletin 2017/41**

(21) Application number: **16305416.6**

(22) Date of filing: **08.04.2016**

(51) Int Cl.:
***C04B 28/02*** *(2006.01)*
***C04B 20/10*** *(2006.01)*
***C04B 40/06*** *(2006.01)*
***C09K 8/467*** *(2006.01)*
***C09K 8/473*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **Services Pétroliers Schlumberger**
  **75007 Paris (FR)**
  Designated Contracting States:
  **FR**
- **SCHLUMBERGER TECHNOLOGY B.V.**
  **2514 JG Den Haag (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
- **DROGER, Nicolas**
  **92142 Clamart Cedex (FR)**
- **ALLOUCHE, Mickael**
  **92142 Clamart Cedex (FR)**

(74) Representative: **Osha Liang**
**2, rue de la Paix**
**75002 Paris (FR)**

(54) **CALCINED POLYSILOXANE OIL ENCAPSULATED EXPANSION AGENT FOR WELL CEMENTING**

(57) A cement slurry includes water, hydraulic cement, and a plurality of capsules in which an expanding agent is at least partially surrounded by a shell including a calcination product of a polysiloxane oil, which may be or become water permeable. The shell includes a calcination product of a polysiloxane oil. Methods of cementing a well and methods to prepare the cement slurry are also disclosed.

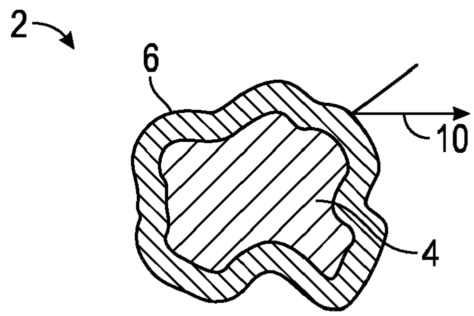


FIG. 1A

EP 3 228 609 A1

## Description

### BACKGROUND

The statements in this section merely provide background information related to the present disclosure and may not constitute prior art.

The present disclosure broadly relates to cement and cementing operations.

Hydraulic cement is any substance provided (at least at one time in the manufacturing process) in a powdered or granular form, that when mixed with a suitable amount of water, can form a paste that can be poured or molded to set as a solid mass. In the oil and gas industry, good bonding between set cement and casing, and also between set cement and the formation, are essential for effective zonal isolation. Poor bonding limits production and reduces the effectiveness of stimulation treatments. Communication between zones can be caused by inadequate mud removal, poor cement/formation bonding, expansion and contraction of the casing resulting from internal pressure variations or thermal stresses, and cement contamination by drilling or formation fluids. Under such circumstances a small gap or microannulus may form at the cement/casing interface, the cement/formation interface, or both.

Representative examples of shrinkage-compensating cement are found in US7988782, US20150107493 and US4419136.

Expansive cement has also been used in the oil and gas industry to cement wells. Representative examples of this technology are found in US2465278, US3884710, US4002483, US4797159, US5942031, US6966376, and US14/307430. Use of expanding agents to cement wells is problematic since the expanding agents known in the art begin hydrating and thus begin to expand as soon as they contact water. Accordingly, if the expanding agent is going to expand the cement after the cement slurry is positioned within the well, the expanding agent cannot be added to the cement slurry mix water. Also, when the expansion agent is added to the slurry, the viscosity and/or yield stress of the slurry may increase before the slurry can be placed and set. This is especially problematic when the cement slurry is exposed to increased temperature conditions such as are frequently encountered downhole in a well. Incorporation of expanding agents thus leads to difficulties in pumping and placement of the slurry, along with complicating job design.

Moreover, since the cement slurry is readily flowable, any hydration of the expanding agent that occurs before the cement begins to set does not contribute to producing a compressive force within the annulus of the well due to the expansion of the set cement.

Various efforts to delay expansion have been suggested. Coating of metal oxide particles with non-hydratable or previously hydrated minerals such as metal carbonates, hydroxides and hydrates was suggested in US4332619, US5741357, EP2169027A1, EP2246408, US7494544, US20020037306, and US7670627. These formulations are also difficult to prepare and have had only limited success. Other general examples of encapsulated materials for delivery include US20130065755, US20050123596, US20040234597, US20040109894, WO2005030174, US7722954, and US6209646.

Portland cement manufacturers have employed shrinkage-compensating cements that include an offsetting "expansive cement", which is a cement that when mixed with water forms a paste. This paste then sets to form a hardened cement. After setting, the cement increases in volume to significantly greater degree than Portland cement paste to form an expanded set cement as defined in the American Concrete Institute 223R-10 Guide for the Use of Shrinkage-Compensating Concrete (2010). Representative examples of shrinkage-compensating cement are found in US7988782, US20150107493 and US4419136.

The cement industry in general, is in need of ways to improve the preparation, handling and design of hydraulic cements with hydratable expanding agents that address these problems and shortcomings; and the oil and gas industry is in need of ways to better and more controllably delay expansion of the expanding agents, and to improve the bonding between the set cement and the casing within the well annulus.

### SUMMARY

Some embodiments of the present disclosure are directed to expanding cement formulations, along with methods and systems for placing the cement. In some embodiments, the formulations include a delayed action encapsulated expanding agent which expands as the cement sets to form a radially pre-stressed cement sheath within an annulus between the well casing and a surrounding barrier, such that the expanded set cement is transversely compressed between, and bonded to, the well casing and the borehole wall or another tubular body concentric with the well casing.

In one aspect, embodiments are directed to a method to cement a subterranean well having a borehole disposed through a formation, comprising: (i) preparing a cement slurry comprising water, hydraulic cement, and a plurality of capsules comprising an expanding agent at least partially surrounded by a shell, which may optionally be water permeable, comprising a calcination product of a polysiloxane oil; (ii) placing the slurry in an annular region of the well between a first tubular body and a borehole wall, or between the first tubular body and a second tubular body; (iii) hardening the

slurry to form an at least partially set cement; and (iv) hydrating and expanding the expanding agent to form an expanded set cement within the annular region.

In another aspect, embodiments are directed to a method to produce a cement slurry, comprising: combining water, a hydraulic cement, and a plurality of capsules comprising an expanding agent at least partially surrounded by a shell, which may optionally be water permeable, comprising a calcination product of a polysiloxane oil; and mixing to form the cement slurry.

## BRIEF DESCRIPTION OF THE DRAWINGS

FIG. 1A is a schematic diagram showing an essentially impermeable capsule according to embodiments of the disclosure;

FIG. 1B is a schematic diagram showing the capsule of FIG. 1A after becoming permeable according to embodiments of the disclosure;

FIG. 1C is a schematic diagram showing the capsule of FIG. 1A and or FIG. 1B after removal of shell material according to further embodiments of the disclosure;

FIG. 2 shows a diagram of a well cemented according to embodiments of the disclosure;

FIG. 3 shows a diagram of an annulus between two tubular members cemented according to embodiments of the disclosure;

FIG. 4 is a graph showing a calorimetry curve for hydration of a comparative untreated expanding agent;

FIG. 5 is a graph showing a calorimetry curve for hydration of an exemplary encapsulated expanding agent according to embodiments disclosed herein; and

FIG. 6 is a graph showing the expansion of comparative and exemplary cement slurries according to embodiments disclosed herein, evaluated according to API 10B-5.

## DETAILED DESCRIPTION

The present disclosure will be described in terms of treatment of vertical wells, but is equally applicable to wells of any orientation. As used herein, "transverse" is intended to refer to a direction transverse to the axis of the well, e.g., the horizontal direction in a vertical well and vice versa. The disclosure will be described for hydrocarbon-production wells, but it is to be understood that the disclosed methods can be used for wells for the production or injection of other fluids, such as water or carbon dioxide, for example. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10. In other words, when a certain range is expressed, even if only a few specific data points are explicitly identified or referred to within the range, or even when no data points are referred to within the range, it is to be understood that applicant appreciates and understands that any and all data points within the range are to be considered to have been specified, and that the applicant has possession of the entire range and all points within the range.

As used in the specification and claims, "near" is inclusive of "at." The term "and/or" refers to both the inclusive "and" case and the exclusive "or" case, whereas the term "and or" refers to the inclusive "and" case only and such terms are used herein for brevity. For example, a component comprising "A and/or B" may comprise A alone, B alone, or both A and B; and a component comprising "A and or B" may comprise A alone, or both A and B.

In this disclosure, a "tubular body" or "tubular member" may be any string of tubulars that may be run into the wellbore and at least partially cemented in place. Examples include casing, liner, solid expandable tubular, production tubing, drill pipe, and the like. For purposes of clarity and convenience, the following discussion is in reference to well casing as a non-limiting example of a tubular body or member.

As used herein, a "set cement" refers to a cement which has set (e.g., been allowed to cure, allowed to harden, and the like) for a time greater than or equal to the "initial time of setting", also referred to herein simply as the "initial set time" as determined according to ASTM C191-04a, "Time of Setting of a Hydraulic Cement by Vicat Needle", or an equivalent thereof. This same method is also used to determine the "final set time" of the cement slurry.

As used herein, a "bond" between a body within the wellbore and the set cement refers to acoustically coupled contact between the body and the cement and/or the formation of a fluid-tight seal. For purposes herein, a well casing or other tubular body is acoustically coupled to the expanded set cement when the cement is shown to exist behind the well casing by acoustic logging techniques known in the art. Accordingly, for purposes herein, a bond does not exist

between a tubular body or member and a cement sheath when a micro annulus or airspace is present between the two as shown by acoustic logging techniques. Likewise, as used herein, "compression" in the annular region refers to compression in the transverse direction against or between the first tubular member and the borehole wall or second tubular member due to expansion of the cement.

As used herein, the terms "shell" and "coating" are used synonymously to mean the outermost one or group of layers covering or over a surface of a body, but need not directly contact the surface. As used herein, a water permeable shell refers to a shell which comprises one or more components or features which allow for water infiltration into the core through all or part of the shell upon exposure, or following a period of delay after the exposure, of the shell to water, such as when the water present in a cement slurry.

As used herein, the water permeable shell refers to an outer coating which is sufficiently resistant to water infiltration, or which delays water infiltration to delay hydration of the encapsulated material in the particular slurry, system or method and/or conditions thereof

For purposes herein, a shell may be or become water permeable under certain conditions, may include components or sections which are at least partially soluble in aqueous solutions, and/or which may undergo a chemical reaction upon contact with aqueous solutions, and/or which may decompose upon contact with an aqueous solution, and/or which may undergo a phase transition upon contact with an aqueous solution. The water permeable shell thereby allows water infiltration or otherwise allows hydration of the expanding agent or other core material in (or from) the capsule. In embodiments, a water permeable shell includes a shell which at least partially surrounds a core, but which has or forms pores, voids, and/or discontinuities within the shell which allow water to pass through the shell and contact the core when present in an aqueous solution. As used herein, a water permeable shell may also include a shell which allows diffusion of water through the shell, e.g., via partial dissolution of the shell material and/or osmosis.

The terms capsule, encapsulated expanding agent, expanding agent capsule, and the like are used interchangeably to refer to a capsule comprising a core as a single entity disposed within a water-permeable shell.

As used herein, capsules may comprise a single-core arrangement or configuration, i.e., a single core at least partially contained within a shell, which may optionally be or become water permeable (cf. FIG. 1A). In some embodiments, the core is homogenous. In other embodiments, the core may comprise various heterogeneous components. In some embodiments, the shell comprises a single layer. In other embodiments, the shell comprises a plurality of layers, each of which may be the same or different.

As used herein for ease of reference, when a polymer is referred to as comprising a monomer, the monomer is present in the polymer in the polymerized form. As used herein, unless specifically stated otherwise, the term "polymer" refers to a molecule comprising 2 or more "mer" units, and includes oligomers such as dimers, trimers, tetramers, etc., as well as materials having a higher degree of polymerization, i.e., 20 or more. For example, the "mer" of polydimethyl siloxane would be dimethyl siloxane. As used herein, a "polymer" may include both homopolymers and/or copolymers. The term "resin" refers to a solid or highly viscous substance such as a polymer, and resins may or may not comprise prepolymers with reactive groups. A "crosslink" refers to a chemical bond between different chains in a polymer or other complex molecule.

For purposes herein, an aliphatic moiety is defined as a linear and/or a branched saturated hydrocarbon chain. An alicyclic moiety is defined as a cyclic hydrocarbon chain, which may further include one or more heteroatoms. An olefinic moiety is defined as a linear, branched, and/or cyclic hydrocarbon chain comprising at least one carbon-carbon double or triple bond, which may further include a heteroatom. An aromatic moiety refers to a moiety comprising one or more aromatic systems, including one or more heteroaromatic systems.

A "polysiloxane oil" is any liquid polymerized siloxane with organic side chains. For purposes herein, a polysiloxane refers to a polymeric organosilicon compound, commonly referred to as a silicone-based organic polymer, or simply as a silicone having the following structure:

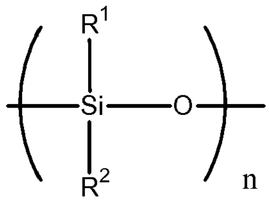

wherein $R^1$ and $R^2$ are the same or different and comprise a hydrocarbyl having from 1 to 20 carbon atoms, and where n is sufficient to form an oil having a viscosity from 100 to 100,000 cSt at 25°C. Polysiloxanes may be linear or ring compounds.

In some embodiments herein, the well cementing slurry exhibits less than 50% relative expansion, based on a total percent expansion of the expanded set cement determined according to API-10B-5, prior to an initial set time for

the cement slurry, determined according to ASTM C191-04a, and greater than 50% relative expansion after the initial set time for the cement slurry. For purposes herein, the percent expansion produced by setting or hardening of the cement slurry into the expanded set cement is determined according to API-10B-5 or an equivalent thereof. In this method, a ring shaped mold sealed on the top and bottom is filled to form a circular ring of cement. The mold has a stationary inner ring surrounded by an expandable outer ring which increases in circumference as the cement slurry inside the mold sets and expands. The test may be conducted at various temperatures and pressures. The percent expansion is determined by first measuring the distance M (mm) between two points on the outer ring at the time of filling the mold with the cement $T_0$ (e.g., measure $M_0$(mm) @ $T_0$), and then again measuring the distance between these same two points after the cement has set to form the expanded set cement. This measurement is determined at the final time $T_f$, as specified in the method (e.g., $M_f$(mm) @ $T_f$). The total percent expansion is then determined by multiplying the difference between the final distance and the initial distance by a constant associated with the particular mold, according to the following formula:

$$\text{Percent expansion} = (M_f\text{-}M_0) * \text{mold constant.}$$

For purposes herein, this percent expansion obtained at the final time $T_f$ is referred to as the total percent expansion of the cement. This total percent expansion of the cement serves as the basis for all relative percent expansion determinations, as discussed herein. For purposes herein, the relative expansion of the cement slurry at a particular time ($T_1$), referred to as the percent relative expansion is equal to the percent expansion of the slurry (or setting cement) measured at a time $T_1$ divided by the total percent expansion achieved by the expanded set cement at $T_f$ determined according to API-10B-5. As an example, if a percent expansion at time $T_1$ is determined according to API-10B-5 to be 0.1%, and the total percent expansion at time $T_f$ is determined according to the same method under the same conditions to be 1%, the percent relative expansion of the cement slurry at time $T_1$ would be:

$$0.1\%/1\% * 100\% = 10\% \text{ relative expansion at } T_1$$

Since the cement slurry being placed within the annulus of the wellbore is readily flowable, any expansion which occurs before the cement begins to set may increase the volume of the cement slurry, and is not thought to contribute to expansion within the annulus which produces a cement sheath transversely compressed therein. Accordingly, in embodiments, at least a percentage of the hydration of the expanding agent is delayed until after the initial set time of the cement, thereby delaying the expansion of the cement to a time after the slurry becomes more resistant to flow. This allows placement of the cement slurry within the annulus and at least partial setting of the cement prior to expansion of the cement.

In embodiments, the delay in expansion of the cement slurry is determined relative to the initial set time, the final set time, or a combination thereof for the cement slurry. The initial set time and the final set time are determined according to ASTM C191-04a, or an equivalent thereof. The relative expansion properties of the cement slurry at various times, or within various time intervals, are determined relative to the total amount of expansion (the total percent expansion) obtained by the cement slurry, utilizing the percent expansion determined according to API-10B-5.

For purposes of the claims and embodiments herein, the percent relative expansion may be determined at standard conditions of 30°C and 1 atmosphere of pressure, unless otherwise stated. In embodiments, to evaluate the suitability of a proposed cement formulation for a particular cementing job, the percent relative expansion is determined at an appropriate pressure and temperature, e.g., a downhole pressure and temperature expected to be encountered during the cementing job, or if there is a range of temperatures, the highest temperature expected for the cement that is within the limits of the testing apparatus, e.g., if the testing apparatus has a maximum testing temperature of 100°C, the testing temperature is the lesser of the maximum temperature of the annular region or 100°C. In embodiments, when it is determined that the proposed cement slurry formulation is suitable for the job, the cement slurry for the well cementing job is prepared in accordance with the formulation meeting the expansion characteristics.

In embodiments the composition and/or arrangement of the outer shell is selected to delay hydration of the expanding agent until a time after the outer shell is combined with the hydraulic cement. As is known to one of skill in the art, the addition of a hydraulic cement to an aqueous medium results in a hydration of the cement and, an expanding agent if present. The shell according to embodiments disclosed herein initially inhibits the infiltration of water into the shell thereby delaying the hydration of the expanding agent.

In embodiments the shell is selected to delay hydration of the expanding agent after being combined in the cement slurry for a time such that prior to an initial set time for the cement slurry, determined according to ASTM C191-04a, or an equivalent thereof, the percent relative expansion of the cement slurry, if any, is less than 50%, based

on the total percent expansion of the expanded set cement determined according to API-10B-5.

In embodiments, the shell is selected to delay hydration of the expanding agent after being combined in the cement slurry for a time such that prior to an initial set time for the cement slurry, determined according to ASTM C191-04a, or an equivalent thereof, the percent relative expansion of the cement slurry that occurs, if any, is less than 50% (or less than 40%, or less than 30%, or less than 20%, or less than 10%), based on the total percent expansion of the expanded set cement determined according to API-10B-5; and after the initial set time for the cement slurry, the percent relative expansion of the cement slurry that occurs is greater than 50% (or greater than 60%, or greater than 70%, or greater than 80%, or greater than 90%), based on the total percent expansion of the expanded set cement determined according to API-10B-5.

Utilizing this test, the ability of the shell to delay hydration of the expanding agent after being combined in the cement slurry may be determined to meet requirements of a particular cementing operation. In embodiments, other method to determine the delay of hydration of the expanding agent may be used including differential scanning calorimetry, a temperature-controlled confinement cell used to measure the effects of expanding agents, and the like.

In an aspect, embodiments relate to a method to cement a subterranean well having a borehole disposed through a formation, comprising preparing a cement slurry comprising water, hydraulic cement, and a plurality of capsules comprising an expanding agent at least partially surrounded by a shell comprising a calcination product of a polysiloxane oil; placing the slurry in an annular region of the well between a first tubular body and a borehole wall, or between the first tubular body and a second tubular body; hardening the slurry to form an at least partially set cement; and hydrating and expanding the expanding agent to form an expanded set cement within the annular region.

In embodiments, the expanding agent comprises calcium oxide, magnesium oxide, calcium sulfate hemihydrate, or a combination thereof, e.g., calcium oxide alone, magnesium oxide alone, or both calcium oxide and magnesium oxide. In embodiments, the expanding agent is present in the cement slurry at a concentration between 0.1 weight percent and 35 weight percent, based on the total weight of the hydraulic cement present.

In embodiments, the expanding agent particles have an average particle size between 0.1 $\mu$m and 500 $\mu$m, or between 1 $\mu$m and 100 $\mu$m, and the coated particles have an average particle size between 1 $\mu$m and 1000 $\mu$m, or between 10 $\mu$m and 500 $\mu$m.

In embodiments, the calcination product is produced by calcination of polydimethylsiloxane, polyphenylmethylsiloxane, polydiphenylsiloxane, or combinations thereof, having a kinematic viscosity from 100 to 100,000 cSt, e.g., from 1,000 to 10,000 cSt. In embodiments, the calcination product of the polysiloxane oil is formed by mixing particles comprising the expanding agent with one or more polysiloxane oils to form oil coated particles, followed by calcining the oil coated particles at a temperature between 200°C and 1000°C, e.g., from 250°C to 650°C, for a period of time between 1 minute and 24 hours, e.g., from 0.5 hours to 10 hours. In embodiments, the particles comprising the expanding agent are calcined at a temperature from 100°C to 1500°C for a period of time between 1 minute and 24 hours to dehydrate or otherwise remove water from the particles prior to said mixing the particles comprising the expanding agent with the polysiloxane oil to form the oil coated particles.

In embodiments, the capsules comprise from 0.1 wt% to 35 wt% of the calcination product of the polysiloxane oil, based on the total weight of the capsules. In embodiments, the capsules comprise a plurality of layers, one or more of which may optionally be water permeable, wherein at least one of the layers comprises the calcination product of one or more polysiloxane oils. In embodiments in which more than one layer comprises the calcination product of one or more polysiloxane oils, the calcination product present in each layer may be the same or different.

In embodiments, the cement slurry comprises an amount of expanding agent sufficient to form the expanded set cement transversely compressed between, and bonded to, the first tubular body and the borehole wall, or the first tubular body and the second tubular body. In embodiments, the bond between the first tubular body and the borehole wall is sufficient to isolating a zone of the formation adjacent the expanded set cement.

In embodiments, the bond between the first tubular body and the expanded set cement is maintained after fluctuating the dimensions of the first tubular body in response to a temperature change, a pressure change, a mechanical disturbance resulting from a well intervention, or a combination thereof.

In embodiments, the shell is selected to allow less than 50% relative expansion, based on a total percent expansion of the expanded set cement determined according to API-10B-5, to occur prior to an initial set time for the cement slurry determined according to ASTM C191-04a, and greater than 50% relative expansion, based on the total percent expansion of the expanded set cement determined according to API-10B-5, to occur after the initial set time for the cement slurry determined according to ASTM C191-04a.

In embodiments, the calcination product of the silicone oil comprises, or consists essentially of an inorganic component, typically silicon oxide, which agglomerates upon calcination forming a continuous or semi-continuous shell disposed around the particle of expanding agent.

In embodiments, the shell may further comprise one or more inorganic oxides, one or more organic polymers, or a combination thereof.

In embodiments, the expanding agent is present in the cement slurry at a concentration between 0.1 or 1 weight

percent and 35 weight percent, based on the total weight of hydraulic cement present.

In embodiments, the expanding agent capsules are present in the cement slurry at a concentration greater than or equal to about 0.1 weight percent based on the total weight of hydraulic cement and the capsules, or greater than or equal to about 0.5 weight percent, or greater than or equal to about 1 weight percent, or greater than or equal to about 5 weight percent, and less than or equal to about 30 weight percent, or less than or equal to about 25 weight percent, or less than or equal to about 20 weight percent, or less than or equal to about 10 weight percent, or less than or equal to about 5 weight percent, based on the total weight of hydraulic cement and capsules. In embodiments, the expanding agent is present in the cement slurry at a concentration between about 0.1 weight percent and 20 weight percent, or between about 0.5 weight percent and 10 weight percent, or between about 1 weight percent and 5 weight percent, based on the total weight of hydraulic cement and capsules. In embodiments, the amount of expanding agent capsules present in the slurry is suitable to produce from 0.1 percent to 5 percent total expansion of the cement slurry upon hardening into an expanded set cement as determined according to API 10B-5 or an equivalent thereof, e.g., from 0.2 to 3 percent total expansion, or from 0.5 to 2 percent total expansion.

In embodiments, the viscosity of the cement slurry during placement may be lower than 1000 cP at a shear rate of 100 $s^{-1}$. In embodiments, the hydraulic cement comprises Portland cement, calcium aluminate cement, fly ash, blast furnace slag, lime, silica, magnesium oxychloride, a geopolymer, zeolite, chemically bonded phosphate ceramic, diatomaceous earth, gilsonite, hematite, ilmenite, manganese tetraoxide, barite, glass or ceramic microspheres, or combinations thereof. In some embodiments the hydraulic cement consists essentially of Portland cement.

In embodiments, the capsules containing the expanding agent may be combined with the hydraulic cement and/or water in any order to make the cement slurry. In embodiments, the encapsulated expanding agent may be blended with the dry hydraulic cement, either offsite at a remote location or on-site as part of the cementing procedure, and then the blend combined with water, optionally more cement and/or other additives, to make the cement slurry.

In embodiments, a method to produce a cement slurry comprises combining water, a hydraulic cement, and a plurality of capsules comprising an expanding agent at least partially surrounded by a shell comprising a calcination product of a polysiloxane oil; and mixing to form the cement slurry. In embodiments, the plurality of capsules are combined with at least a portion of the hydraulic cement prior to combining with water.

In embodiments, the cement slurry according to the instant disclosure is prepared which comprises water, hydraulic cement and capsules comprising a core of an expanding agent at least partially surrounded by (e.g., encapsulated within) a shell (see FIG. 1A). The slurry is then placed in an annular region between a first tubular body (e.g., the well casing) and a borehole wall or a second tubular body (see FIGs. 2 and 3). The slurry is then allowed to at least partially set, also referred to in the art as "harden", i.e., allowed to set for a time greater than or equal to the first or initial set time measured for the cement slurry when determined according to ASTM C191-04a, or an equivalent thereof. Water contacting the capsules results in the infiltration of a portion of the water present in the slurry into the capsules. As the water contacts the expanding agent, the expanding agent hydrates, causing the expanding agent to expand. In embodiments, this expansion may cause the remaining portion of the shell to rupture, thus releasing or further reducing the inhibition of the water contacting the expanding agent, or otherwise further accelerating hydration and expansion of the expanding agent.

Expansion of the expanding agent within the partially set cement forms an expanded set cement within the annular region of the wellbore. In embodiments, the amount of expansion of the cement is sufficient to form an expanded set cement radially pre-stressed within the cement sheath, i.e., the expanded set cement is transversely compressed between the first tubular body and the borehole wall, or the first tubular body and the second tubular body.

In some embodiments, the amount of expanding agent present in the cement slurry is sufficient to produce an expanded set cement in a state of compression within the annular region which facilitates maintenance of a bond with the first tubular member and the borehole wall or second tubular member.

The method may further comprise fluctuating the dimensions of the first tubular body, e.g., allowing the dimensions of the tubular body to fluctuate in response to a temperature change, a pressure change, or a mechanical disturbance resulting from a well intervention or a combination thereof. This is a common technique applied when conducting sonic logging of the well to determine the presence and quality of the cement sheath in the annulus between the well casing the next barrier. The method may also further comprise transversely compressing the set cement between the first tubular body and the borehole wall or second tubular body to maintain bonding therewith, e.g., allowing the set cement to expand and/or to maintain the state of compression, during and/or after the dimensional fluctuation of the first tubular body.

In a further aspect, embodiments relate to methods for maintaining zonal isolation in a wellbore. A cement slurry is prepared that comprises water, hydraulic cement and capsules comprising an expanding agent at least partially surrounded by a shell, which may optionally be water permeable, comprising a calcination product of a polysiloxane oil. The slurry is then placed in an annular region between a first tubular body and a borehole wall or a second tubular body. The slurry is hardened, e.g., allowed to harden, to form an at least partially set cement. Water is infiltrated, e.g., allowed to infiltrate, into the capsules to hydrate the expanding agent in the core. The set cement is expanded to compress

against and bond with the borehole wall to isolate a zone of the formation adjacent the expanded cement. The compression and bond are maintained adjacent the isolated zone after dimensions of the first tubular body are fluctuated, e.g., allowed to fluctuate in response to a temperature change, a pressure change, or a mechanical disturbance resulting from a well intervention or a combination thereof. In embodiments an acoustic logging tool is introduced into the tubular body. The tool measures acoustic impedance, amplitude, attenuation or a bond index or a combination thereof. In some embodiments, the measurements are taken azimuthally, longitudinally or both along the tubular body.

For all aspects, the expansion of the expanding agent, and thus the expansion of the cement, may be delayed for a particular period of time after initial contact of the capsules containing the expanding agent (e.g., the encapsulated expanding agent) with water. In embodiments, the capsules are "activated" upon contact with water to allow infiltration of water therein.

In some embodiments, the composition and/or configuration of the shell may be selected to delay the time between contacting the cement composition with water (i.e., preparing a cement slurry comprising water, hydraulic cement and capsules comprising an expanding agent at least partially surrounded by a shell comprising a calcination product of a polysiloxane oil and expansion of the set cement brought about by hydration and subsequent expansion of the expanding agent (e.g., infiltration of water into the capsule and/or rupture of the shell to hydrate and expand the expanding agent).

In embodiments, the selection of the shell composition, including the calcination product of a polysiloxane oil, may include selection of a plurality of layers, which may be the same or different in composition, thickness, or a combination thereof. In embodiments, the selection of the shell may include selecting the composition of the polysiloxane oil, the amount of polysiloxane oil used to coat the expanding agent particles, the calcination temperature and/or time, the calcination conditions including in an inert atmosphere or in the presence of oxygen, and the like. These selections may thus increase or decrease the thickness of the encapsulating outer layer or layers of the shell (i.e., the number and composition of each shell layer, the thickness of each shell layer, or a combination thereof. In embodiments, other inorganic oxides may be incorporated into the polymeric shell which, upon contact with the aqueous solution of the cement formulation, at least partially dissolve to form weaknesses or discontinuities within the shell thus allowing for water infiltration into the shell with subsequent activation (hydration of the expanding agent).

In embodiments, the particles comprising the expanding agent may be heat-treated before the coating, to remove any residual water or hydrate. This can be done in any oven or furnace, including rotary calciner and conveyor belt furnace, at temperature ranging from 100°C to 1500°C over a time from about 1 minute to 24 hours.

In embodiments, the polysiloxane oils, i.e., silicone oils have the following structure:

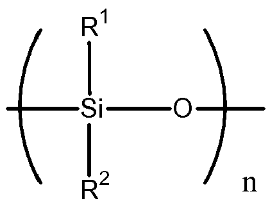

wherein $R^1$ and $R^2$ are the same or different and comprise hydrocarbyl of from 1 to 20 carbon atoms, and where n is sufficient to form an oil having a viscosity from 100 to 100,000 cSt at 25°C.

In embodiments, $R^1$ and $R^2$ are independently selected from the group consisting of methyl, ethyl, propyl, phenyl, and combinations thereof. In embodiments, the particles are coated with one or more polysiloxane oils, which can be of different types, different molecular weights, i.e., different viscosities, or both. Examples of suitable silicone oils include polydimethylsiloxane (PDMS), polyphenylmethylsiloxane (PPMS), polydiphenylsiloxane (PDPS) and any co-polymers thereof. Mixtures comprising silicone oils, and/or mixtures of different silicone oils may also be used. In embodiments, the kinematic viscosity of each of the silicone oils can range from 100 to 100,000 cSt at 25°C. In embodiments, the viscosity of each polysiloxane oil is equal to or greater than 1000 cSt and less than or equal to 10,000 cSt.

In embodiments, the particles comprising the expanding agent, or which consist essentially of the expanding agent are mixed with the silicone oil in any type of mixer, for example high-energy mixer or V-blender. The silicone oil aggregates and coats the particles forming the oil coated particles. The resulting material is then calcined at high temperature. Any method may be used including using a rotary kiln or calciner, a conveyor belt furnace, or the like, at temperature ramps which reach the treatment temperature between 200°C and 1000°C, e.g., from 250°C to 650°C, or from 350°C to 450°C. In embodiments, the particles are calcined for 1 minute to about 24 hours, or from 0.5 hours to about 10 hours. Multiple layers may be applied to increase the thickness of the coating.

In embodiments, the residual coating, i.e., the calcination product of the polysiloxane oil or oils, is present in the capsules at from 0.1 weight percent to 35 weight percent, or from about 1 weight percent to about 15 weight percent, or from about 1 weight percent to about 5 weight percent, based on the total weight of the capsules. In embodiments,

the average particle size of the expanding agent particles is between 0.1 μm and 500 μm, or between 1 μm and 100 μm, and the coated particles have an average particle size between 1 μm and 1000 μm, or between 10 μm and 500 μm.

In embodiments, the shell is selected to delay water infiltration into the capsule, e.g., causing a longer time to dissolve, thereby delaying hydration and subsequent expansion of the expanding agent until the cement slurry is properly placed within the annulus of the well bore and has begun to set i.e., allowed to set for a time greater than or equal to the first or initial set time measured for the cement slurry when determined according to ASTM C191-04a, or an equivalent thereof.

In the figures, like numerals are used to designate like parts. As shown in FIG. 1A, the capsule 2 comprises a core 4, comprising an expanding agent, which is at least partially surrounded by a shell 6. Initially, the water is excluded by the impermeable shell 6, as shown by arrow 10.

As shown in FIG. 1B, after activation, e.g., by exposure to water present in the cement slurry, the capsule 2' comprises a core 4', comprising the expanding agent, which is at least partially surrounded by a shell 6', which has become water permeable, e.g., by at least partial dissolution, hydrolysis, decomposition, or other means of degradation of one or more components of the shell 6'. When the material of the shell 6' becomes permeable, water infiltrates as shown by arrow 10' through the activated shell 6', even though in some embodiments the shell 6' may physically remain generally intact. When the water reaches the core 4', the expanding material begins hydrating and expansion is initiated.

As shown in FIG. 1C, in an initial "A" stage, the capsule 2" comprises a core 4", comprising an expanding agent, which is at least partially surrounded by a shell 6", in a manner similar to FIGs. 1A and 1B. Initially, the water is excluded by the impermeable shell 6", as shown by arrow 10. After activation in a later stage "B", e.g., by exposure to water in the cement slurry, the capsule 2" comprises a core 4", comprising the expanding agent, which is directly exposed to water permeation 10" through surface(s) 12", which may comprise holes or exposed areas between any remaining shell portions 6" following removal, e.g., by at least partial dissolution, hydrolysis, decomposition, or other means of degradation of one or more components of the shell 6". When the water reaches the core 4", the expanding material begins hydrating and expansion is initiated. In the "B" stage, the core 4" is expanded and the expansion may further tear and/or rupture the shell 6", and/or otherwise enlarge the openings exposing the surfaces 12", to accelerate further water infiltration 10", hydration, and expansion of the core 4".

With reference to some embodiments, borehole 20 and tubular member 30 are shown in FIGs. 2 and 3, respectively, wherein like numerals are used to designate like parts. The cement slurry comprising the capsules according to any embodiments disclosed herein is placed in the annulus 22 around the casing or other tubular member 24, set (initial and or final) in place, and with hydration of the expanding agent, expanded as indicated at 26 to induce a state of compression and facilitate bonding. The annulus 22 is shown between the tubular member 24 and the borehole wall 20 (FIG. 2) or the tubular member 30 (FIG. 3). The logging tool 28 is then introduced to take measurements as described in some embodiments herein, for example, to map impedance and determine the presence of cement in the annulus 22 behind the tubular member 24, or the absence thereof suggesting formation of a microannulus (not shown) between the tubular member 24 and the set cement in the annulus 22.

The tubular member 24 in FIGs. 2 and 3 (and/or tubular member 30 in FIG. 3) may be dimensionally changed in length, diameter, rotational alignment, etc., e.g., with respect to the wellbore 20 (FIG. 2) or the tubular member 30 (FIG. 3), some examples of which are indicated at 32. Expansion 26 of the cement set in the annulus 22 can occur before the dimensional change 32, and according to some embodiments of the disclosure, the state of compression of the cement is maintained in the annulus 22 during and/or after the dimensional change 32, e.g., by further expansion or increased compression to accommodate the changing dimension(s). Expansion 26 of the cement set in the annulus 22 can instead and/or also occur during and/or after the dimensional change 32, and according to some embodiments of the disclosure, the state of compression of the cement can be induced in the annulus 22 during and/or after the dimensional change 32.

With reference to FIG. 2, in some embodiments a zone 34 is isolated by placement, setting (initial and or final), and expansion 26 of the cement in the annulus 22. The compression and bonding can be maintained during dimensional change 32, e.g., so that the zone 34 remains in isolation and does not fluidly communicate via the annulus 22 with other zones in the formation.

As shown in FIGs. 2 and 3, in embodiments the cement slurry comprises an amount of expanding agent sufficient to form the expanded set cement transversely compressed between (due to expansion 26) and bonded to, the first tubular member (tubular body) 24 and the borehole wall, or the first tubular member (tubular body) 24 and the second tubular member (tubular body) 30.

As shown in FIG. 2, in embodiments, the bonds between the first tubular body 24 and the expanded set cement, and between the borehole wall and the expanded set cement are each sufficient to be acoustically coupled and/or to isolate a zone 34 of the formation adjacent the expanded set cement, e.g., from another zone. In some embodiments, the compression 26 and bonding can be maintained during dimensional change 32, e.g., so that the zone 34 remains in isolation and does not fluidly communicate via the annulus 22 with other zones.

In some embodiments, as shown in FIG. 1A, the capsules 2 comprise or consist essentially of a single-core

configuration, in which the expanding agent is arranged as a single core 4 at least partially surrounded by the initially impermeable shell 6, which is activated by contact with water resulting in permeation and entry of water into the core, as illustrated in FIGs. 1B and 1C. In some embodiments, the capsules may comprise a mixture of one or more types of the single-core capsules (FIGs. 1A, 1B, 1C) and/or one or more layer configurations.

In some embodiments, core-shell type particles can release or expose the encapsulated expanding agent, e.g., all at once, if the shell is ruptured, which can occur mechanically and/or by chemical degradation. As used herein, "rupture" refers to any loss of integrity of the shell whether by tearing, bursting, and so forth. Matrix-island type cores can release the islands of expanding agent upon chemical degradation and/or solubility of the matrix.

In some embodiments, although the rates of water infiltration, release of encapsulated expanding agent, and expansion of the cement may be predicted, the infiltration, release, and expansion profiles can also be observed in laboratory experiments before the particles are used. Such experiments involve exposing a sample quantity of the particles to conditions which match those found in the borehole location and monitoring water infiltration and/or release of expanding agent over time, and/or formulating the cement slurry with the encapsulated particles and monitoring the expansion of the set cement upon exposure to the matching borehole conditions.

In embodiments, the initial set time and final set time for a cement slurry according to embodiments disclosed herein may be determined according to ASTM C191-04a. This may be done at standard temperatures, or at temperatures expected downhole. The expansion properties of the cement slurry upon setting may then be evaluated according to API-10B-5. The amount of expansion of the cement slurry prior to the initial set time may be determined, along with the amount of the expansion after the initial set time but before the final set time. Then the total amount of expansion of the expanded set cement may be determined.

In embodiments, the shell is selected such that the amount of expansion which occurs prior to the initial set time (according to ASTM C191-04a) is less than 1%, or less than 5%, or less than 10%, or less than 20%, or less than 30%, or less than 40%, or less than 50% of the total amount of expansion obtained by the set cement determined according to API-10B-5. In embodiments, the amount of expansion (according to API-10B-5) obtained after the initial set time but before the final set time of the cement slurry (according to ASTM C191-04a) is greater than about 50%, or greater than about 60%, or greater than about 70%, or greater than about 80%, or greater than about 90%, or greater than about 95% of the total amount of expansion obtained by the expanded set cement.

Utilizing this test, the attributes of the shell may be determined to meet requirements of a particular cementing operation.

In embodiments, a system for cementing a subterranean well in an annulus between a casing disposed within a borehole and a formation comprises a cement slurry according to one or more embodiments disclosed herein comprising water, hydraulic cement and a capsules comprising an expanding agent at least partially surrounded by a shell, which may optionally be or become water permeable, comprising a calcination product of a polysiloxane oil; and a pumping system to place a stage of the slurry in the annulus.

**EMBODIMENTS LISTING**

Accordingly, the present disclosure provides the following embodiments, among others:

**E1.** A method to cement a subterranean well having a borehole disposed through a formation, comprising:

(i) preparing a cement slurry comprising water, hydraulic cement, and a plurality of capsules comprising an expanding agent at least partially surrounded by a shell comprising a calcination product of a polysiloxane oil;
(ii) placing the slurry in an annular region of the well between a first tubular body and a borehole wall, or between the first tubular body and a second tubular body;
(iii) hardening the slurry to form an at least partially set cement; and
(iv) expanding the expanding agent to form an expanded set cement within the annular region.

**E2.** The method according to embodiment E1, wherein the shell is at least partially water permeable.
**E3.** The method according to embodiment E1 or E2, wherein the expanding agent comprises calcium oxide, magnesium oxide, calcium sulfate hemihydrate, or a combination thereof.
**E4.** The method according to any one of embodiments E1 to E3, wherein the expanding agent is present in the cement slurry at a concentration between 0.1 weight percent and 35 weight percent, based on the total weight of the hydraulic cement present.
**E5.** The method according to any one of embodiment E1 to E4, wherein an average particle size of the expanding agent particles is between 0.1 μm and 500 μm, or between 1 μm and 100 μm.
**E6.** The method according to any one of embodiment E1 to E5, wherein an average particle size of the capsules (coated particles) is between 1 μm and 1000 μm, or between 10 μm and 500 μm.

**E7.** The method according to any one of embodiment E1 to E6, wherein the calcination product is produced by calcination of polydimethylsiloxane, polyphenylmethylsiloxane, polydiphenylsiloxane, or combinations thereof, having a kinematic viscosity from 100 to 100,000 cSt.

**E8.** The method according to embodiment E7, wherein the calcination product is produced by calcination of polydimethylsiloxane, polyphenylmethylsiloxane, polydiphenylsiloxane, or combinations thereof, having a kinematic viscosity from 1,000 to 10,000 cSt.

**E9.** The method according to any one of embodiment E1 to E8, wherein the calcination product of the polysiloxane oil is formed by mixing particles comprising the expanding agent with one or more polysiloxane oils to form oil coated particles, followed by calcining the oil coated particles at a temperature between 200°C and 1000°C for a period of time between 1 minute and 24 hours.

**E10.** The method according to embodiment E9 wherein the oil coated particles are calcined at a temperature between 250°C and 650°C.

**E11.** The method according to embodiment E9 or E10, wherein the oil coated particles are calcined for 0.5 hours to 10 hours.

**E12.** The method according to any one of embodiments E9 to E11, wherein the oil coated particles are calcined in the presence of oxygen.

**E13.** The method according to any one of embodiments E9 to E11, wherein the oil coated particles are calcined in the absence of oxygen.

**E14.** The method according to any one of embodiments E9 to E13, wherein the particles comprising the expanding agent are calcined at a temperature from 100°C to 1500°C for a period of time between 1 minute and 24 hours prior to said mixing the particles comprising the expanding agent with the polysiloxane oil to form the oil coated particles.

**E15.** The method according to any one of embodiment E1 to E14, wherein the capsules comprise from 0.1 wt% to 35 wt% of the calcination product of the polysiloxane oil, based on the total weight of the capsules.

**E16.** The method according to any one of embodiment E1 to E15, wherein the capsules comprise a plurality of layers, at least one layer comprising the calcination product of the polysiloxane oil.

**E17.** The method according to any one of embodiment E1 to E16, wherein the cement slurry comprises an amount of expanding agent sufficient to form the expanded set cement transversely compressed between, and bonded to, the first tubular body and the borehole wall, or the first tubular body and the second tubular body.

**E18.** The method according to embodiment E17, further comprising isolating a zone of the formation adjacent the expanded set cement.

**E19.** The method according to embodiment E17 or E18, wherein the bond between the first tubular body and the expanded set cement is maintained after fluctuating the dimensions of the first tubular body in response to a temperature change, a pressure change, a mechanical disturbance resulting from a well intervention, or a combination thereof

**E20.** The method according to any one of embodiment E1 to E19, wherein the shell is selected to allow less than 50% relative expansion, based on a total percent expansion of the expanded set cement determined according to API-10B-5, to occur prior to an initial set time for the cement slurry determined according to ASTM C191-04a, and greater than 50% relative expansion to occur after the initial set time for the cement slurry, wherein the initial set time and relative expansion are determined at 30°C and 1 atm.

**E21.** The method according to any one of Embodiments E1 to E20, further comprising:

a. preparing a proposed cement slurry formulation comprising the water, cement, and encapsulated expanding agent;

b. determining that the proposed cement slurry formulation exhibits expansion characteristics of less than 50% relative expansion, based on a total percent expansion of the expanded set cement determined according to API-10B-5, prior to an initial set time for the proposed slurry formulation, determined according to ASTM C191-04aC, and greater than 50% relative expansion after the initial set time for the proposed slurry formulation, wherein the initial set time and relative expansion are determined at a maximum downhole pressure and temperature in the annular region up to 100°C, or at 100°C if the maximum temperature of the annular region is greater than 100°C, during the placing (ii), hardening (iii), and hydrating (iv); and

c. preparing the cement slurry in (i) for the placing in (ii), hardening in (iii), and expanding in (iv), in accordance with the proposed cement slurry formulation having the characteristics as determined in (b).

**M1.** A method to produce a cement slurry, comprising: mixing water, a hydraulic cement, and a plurality of capsules comprising an expanding agent at least partially surrounded by a shell comprising a calcination product of a polysiloxane oil, to form the cement slurry.

**M2.** The method according to embodiment M1, wherein the capsules are combined with at least a portion of the hydraulic cement prior to combining with water. **M3.** The method according to embodiment M1 or M2, wherein the capsules are combined with at least a portion of the water prior to combining with the hydraulic cement.

**M4.** The method according to any one of embodiments M1 to M3, wherein the shell is at least partially water permeable.

**M5.** The method according to any one of embodiments M1 to M4, wherein the expanding agent comprises calcium oxide, magnesium oxide, calcium sulfate hemihydrate, or a combination thereof.

**M6.** The method according to any one of embodiments M1 to M5, wherein the expanding agent is present in the cement slurry at a concentration between 0.1 weight percent and 35 weight percent, based on the total weight of the hydraulic cement present.

**M7.** The method according to any one of embodiment M1 to M6, wherein an average particle size of the particles of the expanding agent is between 0.1 $\mu$m and 500 $\mu$m.

**M8.** The method according to any one of embodiment M1 to M7, wherein an average particle size of the capsules is between 1 $\mu$m and 1000 $\mu$m.

**M9.** The method according to any one of embodiment M1 to M8, wherein the calcination product is produced by calcination of polydimethylsiloxane, polyphenylmethylsiloxane, polydiphenylsiloxane, or combinations thereof, having a kinematic viscosity from 100 to 100,000 cSt.

**M10.** The method according to embodiment M9, wherein the calcination product is produced by calcination of polydimethylsiloxane, polyphenylmethylsiloxane, polydiphenylsiloxane, or combinations thereof, having a kinematic viscosity from 1,000 to 10,000 cSt.

**M11.** The method according to any one of embodiment M1 to M10, wherein the calcination product of the polysiloxane oil is formed by mixing particles comprising the expanding agent with one or more polysiloxane oils to form oil coated particles, followed by calcining the oil coated particles at a temperature between 200°C and 1000°C for a period of time between 1 minute and 24 hours.

**M12.** The method according to embodiment M11 wherein the oil coated particles are calcined at a temperature between 250°C and 650°C.

**M13.** The method according to embodiment M11 or M12, wherein the oil coated particles are calcined for 0.5 hours to 10 hours.

**M14.** The method according to any one of embodiments M11 to M13, wherein the oil coated particles are calcined in the presence of oxygen.

**M15.** The method according to any one of embodiments M11 to M14, wherein the oil coated particles are calcined in the absence of oxygen.

**M16.** The method according to any one of embodiments M11 to M15, wherein the particles comprising the expanding agent are calcined at a temperature from 100°C to 1500°C for a period of time between 1 minute and 24 hours prior to said mixing the particles comprising the expanding agent with the polysiloxane oil to form the oil coated particles.

**M17.** The method according to any one of embodiment M1 to M16, wherein the capsules comprise from 0.1 wt% to 35 wt% of the calcination product of the polysiloxane oil, based on the total weight of the capsules.

**M18.** The method according to any one of embodiment M1 to M17, wherein the capsules comprise a plurality of layers, at least one layer comprising the calcination product of the polysiloxane oil.

**M19.** The method according to any one of embodiment M1 to M18, wherein the cement slurry comprises an amount of expanding agent sufficient to form the expanded set cement transversely compressed between, and bonded to, the first tubular body and the borehole wall, or the first tubular body and the second tubular body.

**M20.** The method according to embodiment M19, further comprising isolating a zone of the formation adjacent the expanded set cement.

**M21.** The method according to embodiment M19 or M20, wherein the bond between the first tubular body and the expanded set cement is maintained after fluctuating the dimensions of the first tubular body in response to a temperature change, a pressure change, a mechanical disturbance resulting from a well intervention, or a combination thereof.

**M22.** The method according to any one of embodiment M to M21, wherein the shell is selected to allow less than 50% relative expansion, based on a total percent expansion of the expanded set cement determined according to API-10B-5, to occur prior to an initial set time for the cement slurry determined according to ASTM C191-04a, and greater than 50% relative expansion to occur after the initial set time for the cement slurry.

**M23.** The method according to any one of embodiments M1 to M3, wherein the expanding agent comprises calcium oxide, magnesium oxide, calcium sulfate hemihydrate, or a combination thereof.

**S1.** A system for cementing a subterranean well in an annulus between a casing disposed within a borehole and a formation comprising a cement slurry comprising water, hydraulic cement, and a plurality of capsules comprising an expanding agent at least partially surrounded by a shell comprising a calcination product of a polysiloxane oil; and a pumping system to place a stage of the slurry in the annulus.

**S2.** The system according to embodiment S1, wherein the shell is at least partially water permeable.

**S3.** The system according to embodiment S1 or S2, wherein the expanding agent comprises calcium oxide, magnesium oxide, calcium sulfate hemihydrate, or a combination thereof.

**S4.** The system according to any one of embodiments S1 to S3, wherein the expanding agent is present in the cement slurry at a concentration between 0.1 weight percent and 35 weight percent, based on the total weight of the hydraulic cement present.

**S5.** The system according to any one of embodiments S1 to S4, wherein an average particle size of the particles of the expanding agent is between 0.1 μm and 500 μm.

**S6.** The system according to any one of embodiments S1 to S5, wherein an average particle size of the capsules is between 1 μm and 1000 μm.

**S7.** The system according to any one of embodiments S1 to S6, wherein the calcination product is produced by calcination of polydimethylsiloxane, polyphenylmethylsiloxane, polydiphenylsiloxane, or combinations thereof, having a kinematic viscosity from 100 to 100,000 cSt.

**S8.** The system according to embodiment S7, wherein the calcination product is produced by calcination of polydimethylsiloxane, polyphenylmethylsiloxane, polydiphenylsiloxane, or combinations thereof, having a kinematic viscosity from 1,000 to 10,000 cSt.

**S9.** The system according to any one of embodiments S1 to S8, wherein the calcination product of the polysiloxane oil is formed by mixing particles comprising the expanding agent with one or more polysiloxane oils to form oil coated particles, followed by calcining the oil coated particles at a temperature between 200°C and 1000°C for a period of time between 1 minute and 24 hours.

**S10.** The system according to embodiment S9 wherein the oil coated particles are calcined at a temperature between 250°C and 650°C.

**S11.** The system according to embodiment S9 or S10, wherein the oil coated particles are calcined for 0.5 hours to 10 hours.

**S12.** The system according to any one of embodiments S9 to S11, wherein the oil coated particles are calcined in the presence of oxygen.

**S13.** The system according to any one of embodiments S9 to S11, wherein the oil coated particles are calcined in the absence of oxygen.

**S14.** The system according to any one of embodiments S9 to S13, wherein the particles comprising the expanding agent are calcined at a temperature from 100°C to 1500°C for a period of time between 1 minute and 24 hours prior to said mixing the particles comprising the expanding agent with the polysiloxane oil to form the oil coated particles.

**S15.** The system according to any one of embodiments S1 to S14, wherein the capsules comprise from 0.1 wt% to 35 wt% of the calcination product of the polysiloxane oil, based on the total weight of the capsules.

**S16.** The system according to any one of embodiments S1 to S15, wherein the capsules comprise a plurality of layers, at least one layer comprising the calcination product of the polysiloxane oil.

**S17.** The system according to any one of embodiments S1 to S16, wherein the cement slurry comprises an amount of expanding agent sufficient to form the expanded set cement transversely compressed between, and bonded to, the first tubular body and the borehole wall, or the first tubular body and the second tubular body.

**S18.** The system according to embodiment S17, further comprising isolating a zone of the formation adjacent the expanded set cement.

**S19.** The system according to embodiment S17 or S18, wherein the bond between the first tubular body and the expanded set cement is maintained after fluctuating the dimensions of the first tubular body in response to a temperature change, a pressure change, a mechanical disturbance resulting from a well intervention, or a combination thereof.

**S20.** The system according to any one of embodiments S1 to S19, wherein the shell is selected to allow less than 50% relative expansion, based on a total percent expansion of the expanded set cement determined according to API-10B-5, to occur prior to an initial set time for the cement slurry determined according to ASTM C191-04a, and greater than 50% relative expansion to occur after the initial set time for the cement slurry.

## EXAMPLES

The following examples are provided to more fully illustrate the disclosure. These examples are not intended to limit the scope of the disclosure in any way.

To determine the delay provided by the outer layer, the hydration heat of the material was measured over time after contacting the capsules with water. The heat released upon hydration results from the following reactions:

$$CaO + H2O \rightarrow Ca(OH)2 \text{ , 1150 J/g} \qquad (I)$$

$$MgO + H2O \rightarrow Mg(OH)2,\ 930\ J/g \qquad (II)$$

As shown in FIG. 4, in comparative Example 1, when a comparative untreated, non-encapsulated expanding agent is contacted with water, at lower temperatures, i.e., below 60°C, the heat is mainly provided by reaction (I) during the first hours and a plateau is reached within 15-20 hours.

Exemplary capsules were prepared as Example 2 by mixing a pre-treated CaO/MgO, which was first pre-calcined at 1000°C to remove water, with 5.3 weight percent polydimethyl silane (PDMS) having a kinematic viscosity or 1000 cSt at 25 °C. The oil-coated particles were then calcined at 355°C for 2 hours to form the silica coated particles ("capsules").

As shown in FIG. 5, contacting the capsules prepared according to Example 2 results in a much slower hydration, with a plateau being reached after more than 60 hours.

Similar cement slurries were formulated for expansion testing according to API testing via linear expansion cells using API 10B-5, or ISO 10426-5. Comparative Example 3 utilized the untreated CaO/MgO evaluated in Comparative Example 1, and Example 4, employed the capsules evaluated in Example 2. The cement slurries were prepared as described in Table 1 and subjected to testing according to API 10B-5.

**Table 1: Cement slurries for showing effect of expanding agent encapsulation**

| Component | Example 1 - Slurry A Untreated CaO/MgO | Example 2 - Slurry B Siloxane Coated CaO/MgO |
|---|---|---|
| Class G cement (mass by weight of cement) | 746 g | 749 g |
| Untreated (dry) CaO/MgO | 75 g | - |
| Siloxane coated CaO/MgO | - | 75 g |
| Fluid loss | 2.2 | 2.2 g |
| Antifoam | 3.0 g | 3.0 g |
| Dispersant | 4.4 g | 4.4 g |
| Anti-settling | 1.5 g | 1.5 g |
| Retarder | 2.4 g | - |
| Water | 339 g | 334 g |

As shown in FIG. 6, the comparative untreated expanding agent achieved an expansion plateau after 2 days. In contrast, the exemplary encapsulated expanding agent showed expansion which increased at a much slower rate, with a delay or induction period. The steady state was reached after 5-6 days.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112 (f) for any limitations of any of the claims herein, except for those in which the claim expressly uses the words 'means for' together with an associated function.

## Claims

**1.** A method to prepare a well cementing slurry, comprising:

coating particles comprising an expanding agent with a calcination product of a polysiloxane oil; and
combining the coated particles with mix water and hydraulic cement to form a cement slurry for cementing a well.

**2.** The method according to claim 1, wherein the expanding agent particles have an average particle size between 0.1 μm and 500 μm (or between 1 μm and 100 μm), and the coated particles have an average particle size between

1 μm and 1000 μm (or between 10 μm and 500 μm).

**3.** The method according to claim 1 or claim 2, wherein the polysiloxane oil comprises polydimethylsiloxane, polyphenylmethylsiloxane, polydiphenylsiloxane, or combinations thereof, having a kinematic viscosity from 100 to 100,000 cSt.

**4.** The method according to any one of claims 1 to 3, wherein the coated particles are formed by mixing particles comprising the expanding agent with one or more polysiloxane oils to form oil-coated particles, followed by calcining the oil-coated particles at a temperature between 200°C and 1000°C, for a period of time between 1 minute and 24 hours.

**5.** The method according to claim 4, wherein the particles comprising the expanding agent are calcined at a temperature from 100°C to 1500°C for a period of time between 1 minute and 24 hours prior to said mixing the particles comprising the expanding agent with the polysiloxane oil to form the oil-coated particles.

**6.** The method according to any one of claims 1 to 5, wherein the coated particles comprise from 0.1 wt% to 35 wt% of the calcination product of the polysiloxane oil, based on the total weight of the coated particles.

**7.** The method according to any one of claims 1 to 6, wherein the coated particles comprise a plurality of layers, at least one layer comprising the calcination product of the polysiloxane oil.

**8.** The method according to any one of claims 1 to 7, wherein the coated particles are selected to allow less than 50% relative expansion, based on a total percent expansion of the expanded set cement determined according to API-10B-5, to occur prior to an initial set time for the well cementing slurry determined according to ASTM C191-04a, and greater than 50% relative expansion to occur after the initial set time for the well cementing slurry.

**9.** The method according to any one of claims 1 to 8, further comprising mixing the coated particles and the mix water, and blending the mixture with the hydraulic cement.

**10.** The method according to any one of claims 1 to 8, further comprising dry blending the coated particles and the hydraulic cement, and mixing the dry blend with the mix water.

**11.** The method according to any one of claims 1 to 10, wherein the expanding agent comprises calcium oxide, magnesium oxide, calcium sulfate hemihydrate, or a combination thereof.

**12.** A well cementing slurry, comprising: water, a hydraulic cement, and a plurality of particles comprising an expanding agent coated with a calcination product of a polysiloxane oil.

**13.** A well cementing slurry, comprising: water, a hydraulic cement, and a plurality of particles comprising an expanding agent coated with a calcination product of a polysiloxane oil, wherein the slurry is made according to the method of any one of claims 1 to 11.

**14.** A system to cement a subterranean well, comprising: the well cementing slurry according to claim 12 or claim 13; and a pumping system to place the slurry in an annular region of the well.

**15.** A method to cement a subterranean well, comprising:

(i) preparing the well cementing slurry according to claim 12 or claim 13;
(ii) placing the slurry in an annular region of the well around a tubular member;
(iii) hardening the slurry to form an at least partially set cement; and
(iv) hydrating the expanding agent to form an expanded set cement within the annular region.

**16.** The method according to claim 15, wherein the cement slurry comprises an amount of expanding agent sufficient to form the expanded set cement transversely compressed within the annular region, and optionally isolating a zone of the formation adjacent the expanded set cement.

**17.** The method according to claim 15 or claim 16, further comprising:

a. preparing a proposed cement slurry formulation comprising the water, cement, and encapsulated expanding agent;

b. determining that the proposed cement slurry formulation exhibits expansion characteristics of less than 50% relative expansion, based on a total percent expansion of the expanded set cement determined according to API-10B-5, prior to an initial set time for the proposed slurry formulation, determined according to ASTM C191-04aC, and greater than 50% relative expansion after the initial set time for the proposed slurry formulation, wherein the initial set time and relative expansion are determined at a maximum downhole pressure and temperature in the annular region up to 100°C, or at 100°C if the maximum temperature of the annular region is greater than 100°C; and

c. preparing the cement slurry in (i) for the placing (ii), hardening (iii), and hydrating (iv), in accordance with the proposed cement slurry formulation exhibiting the characteristics determined in (b).

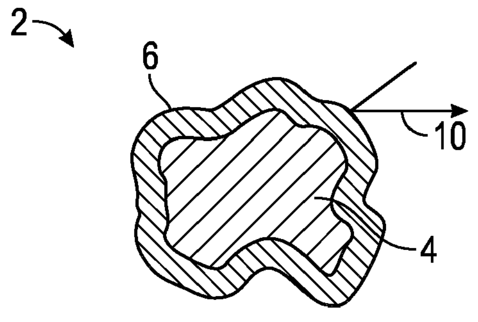


FIG. 1A

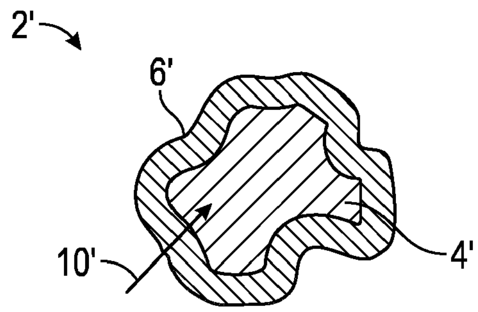


FIG. 1B

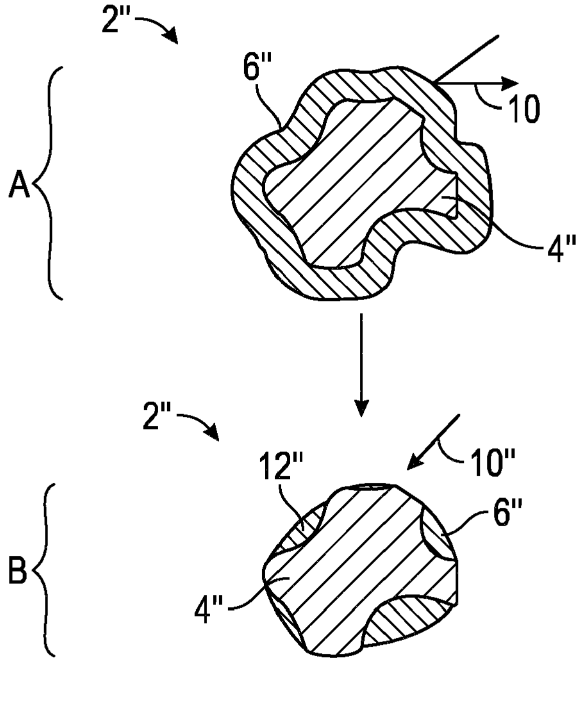


FIG. 1C

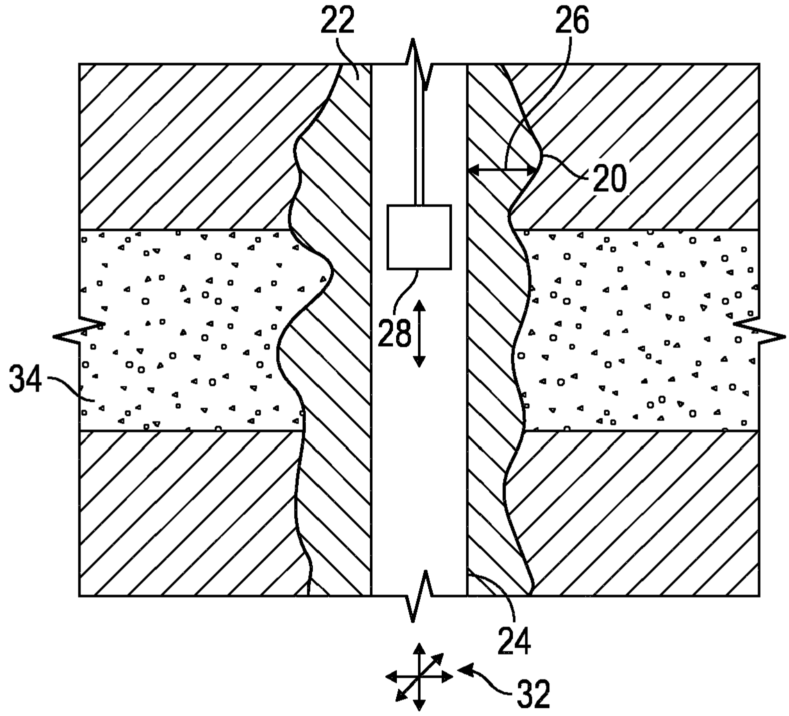


FIG. 2

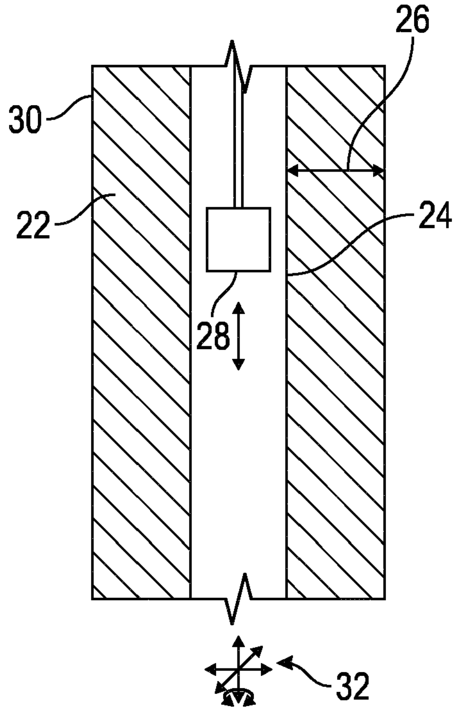


FIG. 3

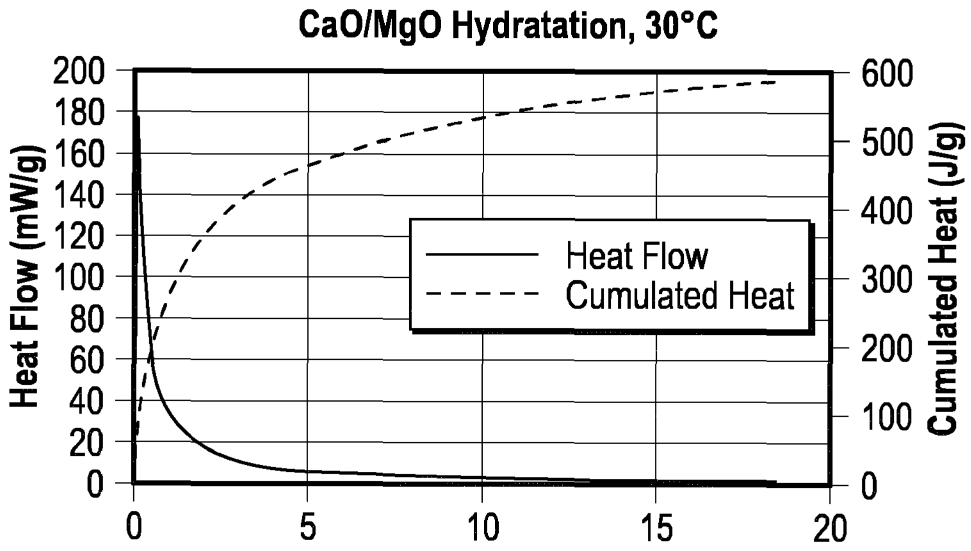
CaO/MgO Hydratation, 30°C
Heat Flow (mW/g)
Cumulated Heat (J/g)
200
180
160
140
120
100
80
60
40
20
0
600
500
400
300
200
100
0
0
5
10
15
20
Heat Flow
Cumulated Heat

FIG. 4

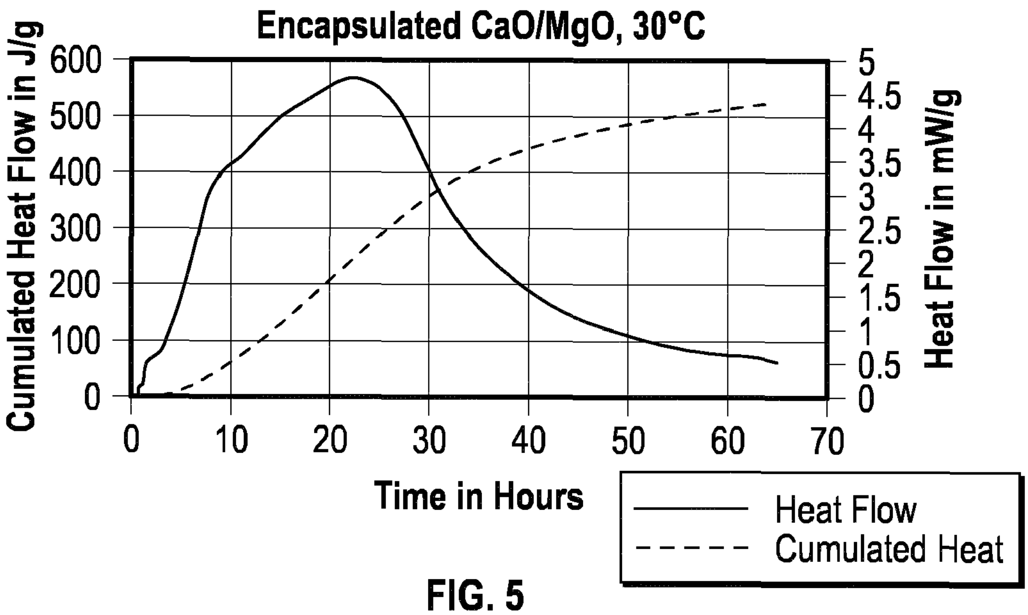
Encapsulated CaO/MgO, 30°C
Cumulated Heat Flow in J/g
Heat Flow in mW/g
600
500
400
300
200
100
0
5
4.5
4
3.5
3
2.5
2
1.5
1
0.5
0
0
10
20
30
40
50
60
70
Time in Hours
Heat Flow
Cumulated Heat

FIG. 5

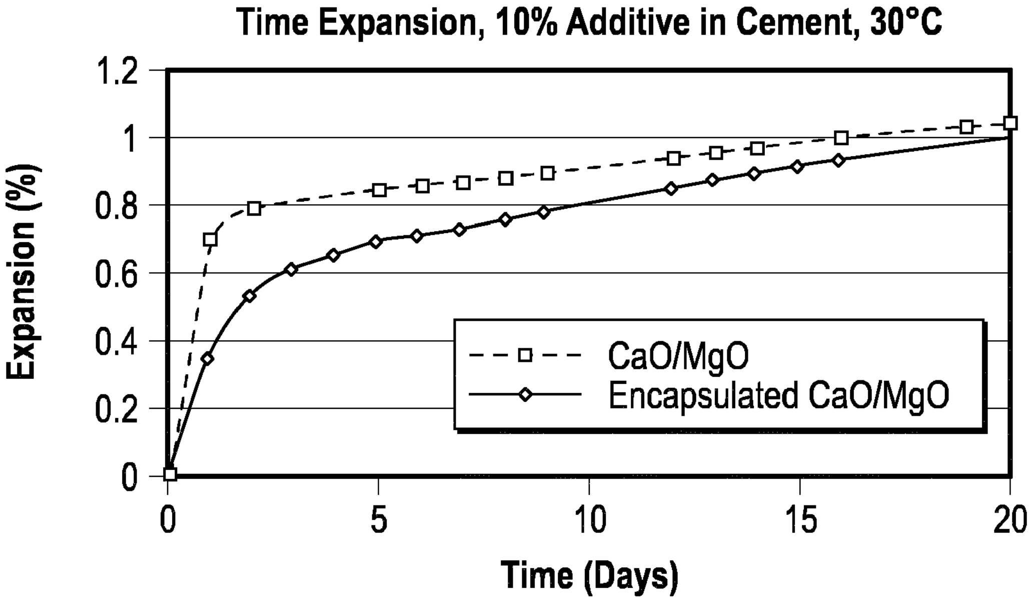
Time Expansion, 10% Additive in Cement, 30°C
Expansion (%)
1.2
1
0.8
0.6
0.4
0.2
0
0
5
10
15
20
Time (Days)
CaO/MgO
Encapsulated CaO/MgO

FIG. 6

Europäisches Patentamt
European Patent Office
Office européen des brevets

# EUROPEAN SEARCH REPORT

Application Number
EP 16 30 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 198 01 610 A1 (BUNDESREP DEUTSCHLAND [DE]) 29 July 1999 (1999-07-29)<br>* abstract *<br>* claims 1-6 * | 1-17 | INV.<br>C04B28/02<br>C04B20/10<br>C04B40/06<br>C09K8/467<br>C09K8/473 |
| A | WO 2005/061846 A1 (HALLIBURTON ENERGY SERV INC [US]; RAVI KRISHNA M [US]; REDDY BAIREDDY) 7 July 2005 (2005-07-07)<br>* abstract *<br>* page 5, line 8 - line 16 *<br>* page 7, line 15 - line 29 * | 1-17 | |
| A,D | US 2004/147406 A1 (GO BONCAN VIRGILIO C [US]) 29 July 2004 (2004-07-29)<br>* abstract *<br>* paragraph [0032] *<br>* claims 1-5,8-10,19,23 * | 1-17 | |
| A | WO 2015/195596 A1 (SCHLUMBERGER SERVICES PETROL [FR]; SCHLUMBERGER CA LTD [CA]; SCHLUMBER) 23 December 2015 (2015-12-23)<br>* abstract *<br>* paragraph [0031] *<br>* claims 1,5,6,8,13,14,17,18,20,21 * | 1-17 | TECHNICAL FIELDS SEARCHED (IPC)<br>C04B<br>C09K |
| A | US 2012/175118 A1 (KHATRI DEEPAK [US] ET AL) 12 July 2012 (2012-07-12)<br>* abstract *<br>* paragraphs [0018], [0021], [0022] *<br>* claims 1-20 * | 1-17 | |
| A,D | EP 2 169 027 A1 (SCHLUMBERGER SERVICES PETROL [FR]; SCHLUMBERGER TECHNOLOGY BV [NL]; SC) 31 March 2010 (2010-03-31)<br>* abstract *<br>* claims 1-13 *<br>-/-- | 1-17 | |

The present search report has been drawn up for all claims

1

| Place of search | Date of completion of the search | Examiner |
|---|---|---|
| The Hague | 4 October 2016 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 16 30 5416

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 5 741 357 A (SHEIKH SHAMIM A [CA]) 21 April 1998 (1998-04-21)<br>* abstract *<br>* claims 1-27 *<br>----- | 1-17 | |
| A | US 2004/168801 A1 (REDDY B RAGHAVA [US] ET AL) 2 September 2004 (2004-09-02)<br>* abstract *<br>* claims 1,5,6,10,15 *<br>----- | 1-17 | |
| A | DE 37 04 783 A1 (HOERLING LUDWIG CHEM [DE]) 25 August 1988 (1988-08-25)<br>* the whole document *<br>----- | 1-17 | |
| | | | TECHNICAL FIELDS SEARCHED (IPC) |

1

The present search report has been drawn up for all claims

| Place of search | Date of completion of the search | Examiner |
|---|---|---|
| The Hague | 4 October 2016 | Kolb, Ulrike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 16 30 5416

This annex lists the patent family members relating to the patent documents cited in the above-mentioned European search report. The members are as contained in the European Patent Office EDP file on
The European Patent Office is in no way liable for these particulars which are merely given for the purpose of information.

04-10-2016

| Patent document cited in search report | Publication date | Patent family member(s) | Publication date |
|---|---|---|---|
| DE 19801610 A1 | 29-07-1999 | NONE | |
| WO 2005061846 A1 | 07-07-2005 | US 2004171499 A1 | 02-09-2004 |
| | | WO 2005061846 A1 | 07-07-2005 |
| US 2004147406 A1 | 29-07-2004 | GB 2398296 A | 18-08-2004 |
| | | US 2004147406 A1 | 29-07-2004 |
| WO 2015195596 A1 | 23-12-2015 | NONE | |
| US 2012175118 A1 | 12-07-2012 | NONE | |
| EP 2169027 A1 | 31-03-2010 | NONE | |
| US 5741357 A | 21-04-1998 | NONE | |
| US 2004168801 A1 | 02-09-2004 | AU 2003227974 A1 | 19-12-2003 |
| | | BR 0311422 A | 15-03-2005 |
| | | CA 2486567 A1 | 11-12-2003 |
| | | EP 1511822 A1 | 09-03-2005 |
| | | MX PA04011874 A | 31-03-2005 |
| | | US 2003221831 A1 | 04-12-2003 |
| | | US 2004168801 A1 | 02-09-2004 |
| | | US 2005126781 A1 | 16-06-2005 |
| | | WO 03102107 A1 | 11-12-2003 |
| DE 3704783 A1 | 25-08-1988 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7988782 B
- US 20150107493 A
- US 4419136 A
- US 2465278 A
- US 3884710 A
- US 4002483 A
- US 4797159 A
- US 5942031 A
- US 6966376 B
- US 14307430 B
- US 4332619 A
- US 5741357 A
- EP 2169027 A1
- EP 2246408 A
- US 7494544 B
- US 20020037306 A
- US 7670627 B
- US 20130065755 A
- US 20050123596 A
- US 20040234597 A
- US 20040109894 A
- WO 2005030174 A
- US 7722954 B
- US 6209646 B